Europäisches Patentamt

European Patent Office

Office européen des brevets

(19)

(11)  **EP 1 031 543 A1**

(12)  # DEMANDE DE BREVET EUROPEEN

(43) Date de publication:
**30.08.2000   Bulletin 2000/35**

(51) Int Cl.7: **C03C 3/087**, C03C 4/02,
C03C 4/08

(21) Numéro de dépôt: **99103543.7**

(22) Date de dépôt: **24.02.1999**

(84) Etats contractants désignés:
**AT BE CH CY DE DK ES FI FR GB GR IE IT LI LU
MC NL PT SE**
Etats d'extension désignés:
**AL LT LV MK RO SI**

(71) Demandeur: **GLAVERBEL
1170 Bruxelles (BE)**

(72) Inventeurs:
• **Coster, Dominique
5032 Corroy-Le-Château (BE)**

• **Delmotte, Laurent
4219 Meeffe (BE)**
• **Foguenne, Marc
5081 Saint-Denis (Namur) (BE)**

(74) Mandataire: **Vandenberghen, Lucienne et al
Glaverbel - Center R. & D.,
Department Industrial Property,
Rue de l'Aurore, 2
6040 Jumet (BE)**

(54)  **Verre sodo-calcique bleu intense**

(57)      La présente invention concerne un verre coloré sodo-calcique bleu.

Il comprend de 0.15 à 1.1% en poids de $Fe_2O_3$, présente un rédox ne dépassant pas 45 %, offre une longueur d'onde dominante ($\lambda_D$) comprise entre 490 et 493 nm et une transmission lumineuse (TLA4) ainsi qu'une pureté d'excitation (P) satisfaisant la relation P > - 0.3 x TLA4 + 24.5.

Ce verre convient particulièrement aux pare-brise, vitrages latéraux et lunettes arrière chauffantes pour automobiles ainsi qu'aux vitrages de bâtiments.

EP 1 031 543 A1

**Description**

La présente invention concerne un verre sodo-calcique coloré bleu, composé de constituants principaux formateurs de verre et d'agents colorants.

L'expression "verre sodo-calcique" est utilisée ici dans le sens large et concerne tout verre qui contient les constituants suivants (pourcentages en poids):

| | |
|---|---|
| $Na_2O$ | 10 à 20 % |
| CaO | 0 à 16 % |
| $SiO_2$ | 60 à 75 % |
| $K_2O$ | 0 à 10 % |
| MgO | 0 à 10 % |
| $Al_2O_3$ | 0 à 5 % |
| BaO | 0 à 2 % |
| BaO + CaO + MgO | 10 à 20 % |
| $K_2O + Na_2O$ | 10 à 20 % |

Ce type de verre trouve un très large usage dans le domaine des vitrages pour le bâtiment ou l'automobile, par exemple. On le fabrique couramment sous forme de ruban par le procédé de flottage. Un tel ruban peut être découpé en feuilles qui peuvent ensuite être bombées ou subir un traitement de renforcement de leurs propriétés mécaniques, par exemple une trempe thermique.

Il est en général nécessaire de rapporter les propriétés optiques d'une feuille de verre à un illuminant standard. Dans la présente description, on utilise 2 illuminants standards. L'illuminant C et l'illuminant A définis par la Commission Internationale de l'Eclairage (C.I.E.). L'illuminant C représente la lumière du jour moyenne ayant une température de couleur de 6700 K. Cet illuminant est surtout utile pour évaluer les propriétés optiques des vitrages destinés au bâtiment. L'illuminant A représente le rayonnement d'un radiateur de Planck à une température d'environ 2856 K. Cet illuminant figure la lumière émise par des phares de voiture et est essentiellement destiné à évaluer les propriétés optiques des vitrages destinés à l'automobile. La Commission Internationale de l'Eclairage a également publié un document intitulé "Colorimétrie, Recommandations Officielles de la C.I.E." (mai 1970) qui décrit une théorie selon laquelle les coordonnées colorimétriques pour la lumière de chaque longueur d'onde du spectre visible sont définies de manière à pouvoir être représentées sur un diagramme ayant des axes orthogonaux x et y, appelé diagramme trichromatique C.I.E. 1931. Ce diagramme trichromatique montre le lieu représentatif de la lumière de chaque longueur d'onde (exprimée en nanomètres) du spectre visible. Ce lieu est appelé "spectrum locus" et la lumière dont les coordonnées se placent sur ce spectrum locus est dite posséder 100 % de pureté d'excitation pour la longueur d'onde appropriée. Le spectrum locus est fermé par une ligne appelée ligne des pourpres qui joint les points du spectrum locus dont les coordonnées correspondent aux longueurs d'onde 380 nm (violet) et 780 nm (rouge). La surface comprise entre le spectrum locus et la ligne des pourpres est celle disponible pour les coordonnées trichromatiques de toute lumière visible. Les coordonnées de la lumière émise par l'illuminant C par exemple, correspondent à x = 0,3101 et y = 0,3162. Ce point C est considéré comme représentant de la lumière blanche et de ce fait a une pureté d'excitation égale à zéro pour toute longueur d'onde. Des lignes peuvent être tirées depuis le point C vers le spectrum locus à toute longueur d'onde désirée et tout point situé sur ces lignes peut être défini non seulement par ses coordonnées x et y, mais aussi en fonction de la longueur d'onde correspondant à la ligne sur laquelle il se trouve et de sa distance depuis le point C rapportée à la longueur totale de la ligne de longueur d'onde. Dès lors, la teinte de la lumière transmise par une feuille de verre coloré peut être décrite par sa longueur d'onde dominante et sa pureté d'excitation exprimée en pour-cent.

Les coordonnées C.I.E. de lumière transmise par une feuille de verre coloré dépendront non seulement de la composition du verre mais aussi de son épaisseur. Dans la présente description, ainsi que dans les revendications, toutes les valeurs de la pureté d'excitation P et de la longueur d'onde dominante $\lambda_D$ de la lumière transmise sont calculées à partir des transmissions spécifiques internes spectrales ($TSI_\lambda$) d'une feuille de verre de 5 mm d'épaisseur. La transmission spécifique interne spectrale d'une feuille de verre est régie uniquement par l'absorption du verre et peut être exprimée par la loi de Beer-Lambert:

$TSI_\lambda = e^{-E.A\lambda}$ où $A_\lambda$ est le coefficient d'absorption du verre (en $cm^{-1}$) à la longueur d'onde considérée et E l'épaisseur du verre (en cm). En première approximation, $TSI_\lambda$ peut également être représenté par la formule

$$(I_3 + R_2)/(I_1 - R_1)$$

où $I_1$ est l'intensité de la lumière visible incidente à une première face de la feuille de verre, $R_1$ est l'intensité de la lumière visible réfléchie par cette face, $I_3$ est l'intensité de la lumière visible transmise à partir de la seconde face de la feuille de verre et $R_2$ est l'intensité de la lumière visible réfléchie vers l'intérieur de la feuille par cette seconde face.

Dans la description qui suit ainsi que dans les revendications, on utilise encore:

- la transmission lumineuse totale pour l'illuminant A (TLA), mesurée pour une épaisseur de 4 mm (TLA4). Cette transmission totale est le résultat de l'intégration entre les longueurs d'onde de 380 et 780 nm de l'expression: $\Sigma\ T_\lambda.E_\lambda.S_\lambda\ /\ \Sigma\ E_\lambda.S_\lambda$ dans laquelle $T_\lambda$ est la transmission à la longueur d'onde $\lambda$, $E_\lambda$ est la distribution spectrale de l'illuminant A et $S_\lambda$ est la sensibilité de l'oeil humain normal en fonction de la longueur d'onde $\lambda$.
- la transmission énergétique totale (TE), mesurée pour une épaisseur de 4 mm (TE4). Cette transmission totale est le résultat de l'intégration entre les longueurs d'onde 300 et 2500 nm de l'expression: $\Sigma\ T_\lambda.E_\lambda\ /\ \Sigma\ E_\lambda$ dans laquelle $E_\lambda$ est la distribution énergétique spectrale du soleil à 30° au dessus de l'horizon.
- la sélectivité (SE), mesurée par le rapport de la transmission lumineuse totale pour l'illuminant A et de la transmission énergétique totale (TLA/TE).
- la transmission totale dans l'ultraviolet, mesurée pour une épaisseur de 4 mm (TUV4). Cette transmission totale est le résultat de l'intégration entre 280 et 380 nm de l'expression: $\Sigma\ T_\lambda.U_\lambda\ /\ \Sigma\ U_\lambda.$ dans laquelle $U_\lambda$ est la distribution spectrale du rayonnement ultraviolet ayant traversé l'atmosphère, déterminée dans la norme DIN 67507.
- Le rapport rédox, qui représente la valeur du rapport Fe2+/Fe total et s'obtient par la formule

$$Fe2{+}/Fe\ total\ =\ [24.4495 \times \log\,(92/\tau_{1050})]/t\text{-}Fe2O3$$

où $\tau_{1050}$ représente la transmission spécifique interne du verre de 5 mm à la longueur d'onde de 1050 nm. t-Fe2O3 représente la teneur totale en fer exprimée sous forme d'oxyde Fe2O3 et mesurée par fluorescence X.

La présente invention concerne en particulier des verres bleu. Ces verres peuvent être utilisés dans des applications architecturales ainsi que comme vitrages de wagons de chemin de fer et véhicules automobiles. En application architecturale, des feuilles de verre de 4 à 6 mm d'épaisseur seront généralement utilisées alors que dans le domaine automobile des épaisseurs de 1 à 5 mm sont couramment employées, en particulier pour la réalisation de vitrages monolithiques et des épaisseurs comprises entre 1 et 3 mm dans le cas de vitrages feuilletés, notamment de pare-brises, deux feuilles de verre de cette épaisseur étant alors solidarisées au moyen d'un film intercalaire, généralement en polyvinyl butyral (pvb).

La demande actuelle en matière de vitrages bleus s'oriente vers des produits présentant pour un niveau de transmission lumineuse donné une coloration marquée, c'est à dire une pureté d'excitation élevée, même pour des niveaux de transmission lumineuse importants, tout en offrant des niveaux de transmission du rayonnement ultraviolet et infrarouge modérés.

Ainsi FR 269526 propose des verres bleus présentant ces qualités. Mais elles ne sont obtenues qu'au prix d'un facteur rédox élevé, supérieur à 50 %, ce qui rend le verre très absorbant de la chaleur et par conséquent difficile à fondre et à affiner dans des fours industriels conventionnels, ou d'une longueur d'onde dominante importante, d'au moins 494 nm, qui correspond, en particulier pour un verre présentant une transmission lumineuse élevée, à une nuance de couleur tendant vers le vert.

L'invention élimine ces inconvénients problématiques et offre un verre coloré sodo-calcique bleu composé de constituants principaux formateurs de verre et d'agents colorants, caractérisé en ce qu'il comprend de 0.15 à 1.1% en poids de $Fe_2O_3$, présente un facteur rédox ne dépassant pas 45 % et offre une longueur d'onde dominante ($\lambda_D$) comprise entre 490 et 493 nm et une transmission lumineuse (TLA4) ainsi qu'une pureté d'excitation (P) satisfaisant la relation P > - 0.3 x TLA4 + 24.5.

Le verre selon l'invention présente donc une pureté élevée pour une transmission lumineuse donnée et une nuance de couleur bleu marqué, même pour des niveaux de transmission lumineuse importants, tout en pouvant être aisément obtenu dans des fours de verrerie industrielle conventionnels.

De plus, les verres selon l'invention ont l'avantage de combiner une couleur bleue avec une sélectivité élevée. On atteint aisément une sélectivité S > 1,3. Cette propriété est particulièrement avantageuse tant pour les applications en automobile qu'architecturales car elle permet de limiter l'échauffement lié au rayonnement solaire et donc d'accroître le confort thermique des occupants du véhicule ou du batiment.

Il est avantageux que le verre selon l'invention présente un rapport rédox inférieur à 40 %, ce qui le rend particulièrement aisé à produire.

De préférence, le verre selon l'invention offre une transmission lumineuse supérieure ou égale à 55 %, ce qui le rend utilisable dans la plupart des applications architecturales ou comme vitrage de véhicules.

Ce verre présente également de manière préférée une transmission lumineuse et une pureté d'excitation satisfaisant la relation P > - 0.3 x TLA4 + 26.5, c'est à dire une pureté encore plus importante à tous les niveaux de transmission lumineuse, ce qui correspond bien aux canons esthétiques en vigueur aujourd'hui.

Avantageusement, le verre selon l'invention présente une longueur d'onde dominante inférieure ou égale à 492 nm, ce qui correspond à une nuance bleue très marquée, particulièrement appréciée esthétiquement. De même, des considérations esthétiques peuvent rendre souhaitable que la longueur d'onde dominante de ces verres soit supérieure ou égale à 491 nm, afin que la nuance de bleu obtenue soit spécialement agréable à l'oeil.

Dans certaines formes de l'invention, le verre offre une sélectivité d'au moins 1.3, préférablement d'au moins 1.5, ce qui permet de limiter, pour une transmission lumineuse donnée, l'échauffement des volumes délimités par des vitrages utilisant ce verre.

De préférence, le verre selon l'invention comprend en tant qu'agent colorant l'un au moins des éléments chrome, cobalt, titane, sélénium, cérium, manganèse et vanadium. L'utilisation de ces éléments permet d'ajuster les propriétés optiques du verre de façon optimale et contribue à obtenir un verre offrant la nuance et l'intensité de couleur recherchées.

Le fer est présent dans la plupart des verres existant sur le marché, soit en tant qu'impureté, soit introduit délibérément en tant qu'agent colorant. La présence de $Fe^{3+}$ confère au verre une légère absorption de la lumière visible de faible longueur d'onde (410 et 440 nm) et une très forte bande d'absorption dans l'ultra-violet (bande d'absorption centrée sur 380 nm), tandis que la présence d'ions $Fe^{2+}$ provoque une forte absorption dans l'infra-rouge (bande d'absorption centrée sur 1050 nm). Les ions ferriques donnent au verre une légère coloration jaune, tandis que les ions ferreux donnent une coloration bleu-vert plus prononcée. Toutes autres considérations restant égales, ce sont les ions $Fe^{2+}$ qui sont responsables de l'absorption dans le domaine infra-rouge et qui conditionnent donc TE. La valeur de TE diminue, ce qui fait augmenter celle de SE, lorsque la concentration en $Fe^{2+}$ augmente. En favorisant la présence des ions $Fe^{2+}$ vis à vis des ions $Fe^{3+}$, on obtient donc une sélectivité élevée.

Les effets des différents autres agents colorants envisagés individuellement, pour l'élaboration d'un verre sont les suivants (selon "Le Verre" de H. Scholze - traduit par J. Le Dû - Institut du Verre - Paris):

Cobalt: Le groupe $Co^{II}O_4$ produit une coloration bleu intense avec une longueur d'onde dominante quasi opposée à celle donnée par le chromophore fer-sélénium.

Chrome: La présence du groupe $Cr^{III}O_6$ donne naissance à des bandes d'absorption à 650 nm et donne une couleur vert clair. Une oxydation plus poussée donne naissance au groupe $Cr^{VI}O_4$ qui provoque une bande d'absorption très intense à 365 nm et donne une coloration jaune.

Cérium: La présence des ions cérium dans la composition permet d'obtenir une forte absorption dans le domaine ultra violet. L'oxyde de cérium existe sous deux formes: $Ce^{IV}$ absorbe dans l'ultra violet autour de 240 nm et $Ce^{III}$ absorbe dans l'ultra violet autour de 314 nm.

Sélénium: Le cation $Se^{4+}$ n'a pratiquement pas d'effet colorant, tandis que l'élément non chargé SeO donne une coloration rose. L'anion $Se^{2-}$ forme un chromophore avec les ions ferriques présents et confère de ce fait une couleur brun-rouge au verre.

Vanadium: Pour des teneurs croissantes en oxydes alcalins, la couleur vire du vert à l'incolore, ce qui est provoqué par l'oxydation du groupe $V^{III}O_6$ en $V^{V}O_4$.

Manganèse: apparaît dans le verre sous forme de $Mn^{II}O_6$ pratiquement incolore. Les verres riches en alcalin présentent toutefois une couleur violette à cause du groupe $Mn^{III}O_6$.

Titane: Le TiO2 dans les verres leur donne une coloration jaune. Pour de grandes quantités on peut même obtenir par réduction le groupe $Ti^{III}O_6$ qui colore en violet, voire en marron.

Les propriétés énergétiques et optiques d'un verre contenant plusieurs agents colorants résultent donc d'une interaction complexe entre ceux-ci. En effet, ces agents colorants ont un comportement qui dépend fortement de leur état rédox et donc de la présence d'autres éléments susceptibles d'influencer cet état.

De préférence, le verre selon l'invention comprend moins de 0.1 % en poids de $TiO_2$. Une quantité plus élevée de TiO2 risque de conférer une coloration jaune qui va à l'encontre de la nuance recherchée ici.

Il est également préférable que le verre selon l'invention contienne moins de 0.5 % en poids de CeO2 parmi ses agents colorants. En effet, cet élément absorbant le rayonnement dans l'ultraviolet peut être utilisé pour réduire la transmission du verre dans cette gamme de longueur d'onde, mais il entraîne un déplacement de la longueur d'onde dominante vers le vert. Ce déplacement peut être corrigé par une augmentation du rapport rédox du verre, mais ceci le rend difficile à fondre, comme indiqué plus haut. De plus, le Ce est un élément très onéreux et son utilisation même dans des quantités ne dépassant pas 1 % en poids de CeO2 dans le verre peut entraîner un doublement de prix de revient des matières premières nécessaires à sa fabrication.

Avantageusement, le verre selon l'invention ne contient pas plus de 0.13 % de MnO2 parmi ses agents colorants. MnO2 présente un caractère oxydant qui risque d'induire une nuance verte en modifiant l'état rédox du fer, s'il est utilisé en quantité plus élevée.

Il est également souhaitable que ce verre ne contienne pas de composés fluorés parmi ses agents colorants ou du moins que ceux-ci ne représentent pas plus de 0.2 % en poids du verre. En effets, ces composés entraînent des rejets du four très nuisibles à l'environnement et sont de plus hautement corrosifs vis-à-vis des blocs de matériaux réfractaires qui tapissent l'intérieur dudit four.

D'autre part, on préfère que le verre selon l'invention soit obtenu à partir d'un mélange de constituants principaux formateurs de verre offrant concentration en MgO de plus de 2 % car ce composé favorise la fusion desdits constituants.

Dans des formes préférées de l'invention, le verre comprend les pourcentages en poids en agents colorants suivants, la quantité totale de fer étant exprimée sous forme de $Fe_2O_3$:

| | |
|---|---|
| $Fe_2O_3$ | 0.3 - 1.1 % |
| FeO | 0.10 - 0.30 % |
| Co | 0 - 0.0040 % |
| $Cr_2O_3$ | 0 - 0.0500 % |
| $V_2O_5$ | 0 - 0.0500 % |

et présente les propriétés optiques suivantes:

$$55 \% < TLA4 < 85 \%$$

$$36 \% < TE4 < 60 \%$$

$$P < 12 \%$$

Des verres présentant de telles caractéristiques sont particulièrement adaptés à un grand nombre d'applications automobiles et architecturales. Les propriétés optiques obtenues correspondent à des produits sélectifs, c'est à dire présentant pour un niveau de transmission lumineuse donnée, un niveau de transmission énergétique faible, ce qui limite l'échauffement des volumes délimités par des vitrages fabriqués à base de tels verres. La pureté de transmission ainsi définie est également adéquate pour de telles applications.

Pour certaines applications de l'invention, en particulier dans le domaine automobile il est préférable que les verres selon l'invention présentent une transmission lumineuse supérieure à 70 %, limite inférieure des normes officielles relatives aux vitres latérales avant des voitures, ou 75%, pour les pare-brise de véhicules.

Des verres particulièrement adaptés à la fabrication de vitrages pour automobile, en particulier de pare-brise, comprennent les pourcentages en poids en agents colorants suivants, la quantité totale de fer étant exprimée sous forme de $Fe_2O_3$:

| | |
|---|---|
| $Fe_2O_3$ | 0.3 - 0.7 % |
| FeO | 0.10 - 0.20 % |
| Co | 0 - 0.0020 % |

et présente les propriétés optiques suivantes:

$$72 \% < TLA4 < 85 \%$$

$$49 \% < TE4 < 60 \%$$

$$3 \% < P < 9 \%$$

Plus préférablement encore, pour de telles applications, le verre selon l'invention comprend les pourcentages en poids en agents colorants suivants, la quantité totale de fer étant exprimée sous forme de $Fe_2O_3$:

| | |
|---|---|
| $Fe_2O_3$ | 0.4 - 0.6 % |

(suite)

| | |
|---|---|
| FeO | 0.11-0.16% |
| Co | 0 - 0.0015 % |

et présente les propriétés optiques suivantes:

$$74 \% < TLA4 < 80 \%$$

$$51 \% < TE4 < 58 \%$$

$$3 \% < P < 7 \%$$

$$\lambda_D \leq 492 \text{ nm}$$

Pour des utilisations du verre selon l'invention comme vitrage de bâtiments ou comme vitrages latéraux avant de véhicules, il comprend les pourcentages en poids en agents colorants suivants, la quantité totale de fer étant exprimée sous forme de $Fe_2O_3$:

| | |
|---|---|
| $Fe_2O_3$ | 0.4 - 0.8 % |
| FeO | 0.16 - 0.23 % |
| Co | 0 - 0.0030 % |

et présente les propriétés optiques suivantes:

$$70 \% < TLA4 < 77 \%$$

$$39 \% < TE4 < 50 \%$$

$$4 \% < P < 10 \%$$

Pour de telles applications, il est particulièrement préféré que ce verre comprenne les pourcentages en poids en agents colorants suivants, la quantité totale de fer étant exprimée sous forme de $Fe_2O_3$:

| | |
|---|---|
| $Fe_2O_3$ | 0.55 - 0.75 % |
| FeO | 0.16 - 0.23 % |
| Co | 0 - 0.0020 % |

et présente les propriétés optiques suivantes:

$$70 \% < TLA4 < 74 \%$$

$$41\% < TE4 < 48 \%$$

$$6 \% < P < 9 \%$$

$$\lambda_D \leq 492 \text{ nm}$$

Pour des applications de verre selon l'invention en tant que vitrages latéraux arrière de véhicules et certaines applications architecturales autorisant une transmission lumineuse plus basse, ce qui va de pair avec une diminution de la transmission énergétique du vitrage, laquelle peut être précieuse sous des climats chauds, ce verre présente avantageusement une transmission lumineuse (TLA4) inférieure à 70 %.

Dans ce cas, il est possible et préférable pour des raisons de facilité de fabrication et de réduction du coût des matières premières nécessaires à cette fabrication, que le verre selon l'invention comprenne moins de 0.01 %, de préférence moins de 0.0050 % en poids de $V_2O_5$ et moins de 0.0020 %, de préférence moins de 0.0015 % en poids de $Cr_2O_3$.

Pour ces applications, il est préféré que le verre selon l'invention comprenne les pourcentages en poids en agents colorants suivants, la quantité totale de fer étant exprimée sous forme de $Fe_2O_3$:

| $Fe_2O_3$ | 0.6 - 1.1 % |
|---|---|
| FeO | 0.20 - 0.30 % |
| Co | 0 - 0.0040 % |

et présente les propriétés optiques suivantes:

$$55 \% < TLA4 < 69 \%$$

$$30 \% < TE4 < 47 \%$$

$$6 \% < P < 12 \%$$

Plus préférablement encore, pour les mêmes applications, le verre selon l'invention comprend les pourcentages en poids en agents colorants suivants, la quantité totale de fer étant exprimée sous forme de $Fe_2O_3$:

| $Fe_2O_3$ | 0.75 - 0.95 % |
|---|---|
| FeO | 0.22 - 0.28 % |
| Co | 0 - 0.0030 % |

et présente les propriétés optiques suivantes:

$$63 \% < TLA4 < 69 \%$$

$$36 \% < TE4 < 45 \%$$

$$7 \% < P < 11 \%$$

$$\lambda_D \leq 492 \text{ nm}$$

La gamme de transmission lumineuse ainsi définie rend le verre selon l'invention particulièrement utile pour éviter l'éblouissement par la lumière des phares d'automobiles lorsqu'il est utilisé pour des vitrages latéraux arrières ou comme lunette arrière de véhicules. La gamme de transmission énergétique correspondante apporte au verre sa haute sélectivité.

En vue de faciliter la fusion des verres selon l'invention, il est souhaité qu'ils comprennent parmi leurs agents colorants, moins de 1.0 % en poids de $Fe_2O_3$.

Le verre selon l'invention peut être revêtu d'une couche d'oxydes métalliques réduisant son échauffement par le rayonnement solaire et par conséquent celui de l'habitacle d'un véhicule utilisant un tel verre comme vitrage.

Les verres selon la présente invention peuvent être fabriqués par des procédés traditionnels. En tant que matières premières, on peut utiliser des matières naturelles, du verre recyclé, des scories ou une combinaison de ces matières. Les colorants ne sont pas nécessairement ajoutés dans la forme indiquée, mais cette manière de donner les quantités d'agents colorants ajoutées, en équivalents dans les formes indiquées, répond à la pratique courante. En pratique, le fer est ajouté sous forme de potée, le cobalt est ajouté sous forme de sulfate hydraté, tel que $CoSO_4$.$7H_2O$ ou $CoSO_4$.$6H_2O$, le chrome est ajouté sous forme de bichromate tel que $K_2Cr_2O_7$. Le cérium est introduit sous forme d'oxyde ou de carbonate. Quant au vanadium, on l'introduit sous forme d'oxyde ou de vanadate de sodium. Le sélénium, lorsqu'il est présent, est ajouté sous forme élémentaire ou sous forme de sélénite tel que $Na_2SeO_3$ ou $ZnSeO_3$.

D'autres éléments sont parfois présents en tant qu'impuretés dans les matières premières utilisées pour fabriquer le verre selon l'invention que ce soit dans les matières naturelles, dans le verre recyclé ou dans les scories, mais lorsque ces impuretés ne confèrent pas au verre des propriétés se situant hors des limites définies ci-dessus, ces verres sont considérés comme conformes à la présente invention. La présente invention sera illustrée par les exemples spécifiques de propriétés optiques et de compositions qui suivent.

**EXEMPLES 1 à 59**

Le tableau I donne à titre indicatif et non limitatif la composition de base du verre ainsi que les constituants de la charge vitrifiable à fondre pour produire les verres selon l'invention. Le tableau II donne les proportions en agents colorants et les propriétés optiques de verres selon l'invention. Le tableau III donne à titre de comparaison avec les verres selon l'invention des exemples de verres bleus tendant vers le vert. Les proportions susmentionnées sont déterminées par fluorescence X du verre et converties en l'espèce moléculaire indiquée.

Le mélange vitrifiable peut, si nécessaire, contenir un agent réducteur tel que du coke, du graphite ou du laitier ou un agent oxydant tel que du nitrate. Dans ce cas, les proportions des autres matériaux sont adaptées afin que la composition du verre demeure inchangée.

TABLEAU I

| Analyse du verre de base | | Constituants du verre de base | |
|---|---|---|---|
| $SiO_2$ | 71.5 à 71.9 % | Sable | 571.3 |
| $Al_2O_3$ | 0.8 % | Feldspath | 29.6 |
| CaO | 8.8 % | Chaux | 35.7 |
| MgO | 4.2 % | Dolomie | 167.7 |
| $Na_2O$ | 14.1 % | $Na_2CO_3$ | 189.4 |
| $K_2O$ | 0.1 % | Sulfate | 5.0 |
| $SO_3$ | 0.05 à 0.45 % | | |

TABLEAU II

| N° ex. | Fe2O3 (%) | FeO (%) | Redox (%) | Co (ppm) | TLA4 (%) | TE4 (%) | TUV4 (%) | SE4 | $\lambda_D$ (nm) | P (%) |
|---|---|---|---|---|---|---|---|---|---|---|
| 1 | 0.89 | 0.22 | 27.8 | 20 | 63.8 | 40.3 | 16.5 | 1.58 | 491.3 | 8.7 |
| 2 | 0.87 | 0.26 | 33.2 | 19 | 62.2 | 37.4 | 17.6 | 1.66 | 490.3 | 10.3 |
| 3 | 0.62 | 0.14 | 25.2 | 17 | 72.4 | 52.2 | 25.8 | 1.38 | 490.3 | 6.5 |
| 4 | 0.76 | 0.21 | 31.0 | 16 | 66.2 | 42.3 | 20.2 | 1.56 | 490.2 | 9.0 |
| 5 | 0.38 | 0.08 | 23.6 | 9 | 80.3 | 64.5 | 36.5 | 1.24 | 490.0 | 4.2 |
| 6 | 0.39 | 0.08 | 24.5 | 8 | 79.7 | 63.1 | 35.1 | 1.26 | 490.3 | 4.4 |
| 7 | 0.51 | 0.12 | 27.1 | 7 | 76.6 | 56.2 | 30.8 | 1.36 | 491.0 | 5.3 |
| 8 | 0.40 | 0.08 | 22.7 | 5 | 81.5 | 64.8 | 35.3 | 1.25 | 492.9 | 3.3 |
| 9 | 0.50 | 0.13 | 28.6 | 4 | 77.7 | 55.8 | 30.8 | 1.39 | 492.3 | 4.9 |
| 10 | 0.50 | 0.12 | 26.6 | 10 | 76.9 | 56.8 | 31.4 | 1.35 | 490.2 | 5.3 |
| 11 | 0.50 | 0.118 | 26.2 | 6 | 78.2 | 57.5 | 31.4 | 1.36 | 492.2 | 4.4 |

TABLEAU II   (suite)

| N° ex. | Fe2O3 (%) | FeO (%) | Redox (%) | Co (ppm) | TLA4 (%) | TE4 (%) | TUV4 (%) | SE4 | $\lambda_D$ (nm) | P (%) |
|---|---|---|---|---|---|---|---|---|---|---|
| 12 | 0.48 | 0.118 | 27.3 | 4 | 78.9 | 57.8 | 32.2 | 1.36 | 492.5 | 4.3 |
| 13 | 0.56 | 0.132 | 26.1 | 8 | 76.2 | 54.9 | 29.0 | 1.38 | 492.0 | 5.0 |
| 14 | 0.56 | 0.132 | 26.1 | 12 | 75.0 | 54.5 | 29.0 | 1.37 | 490.3 | 5.8 |
| 15 | 0.50 | 0.134 | 29.7 | 5 | 77.3 | 55.3 | 31.5 | 1.39 | 491.4 | 5.2 |
| 16 | 0.49 | 0.125 | 28.3 | 7 | 77.4 | 56.4 | 31.8 | 1.37 | 490.9 | 5.2 |
| 17 | 0.48 | 0.125 | 28.9 | 4 | 78.4 | 56.7 | 32.2 | 1.38 | 491.9 | 4.7 |
| 18 | 0.55 | 0.142 | 28.6 | 4 | 76.7 | 54.1 | 29.5 | 1.41 | 492.9 | 4.9 |
| 19 | 0.56 | 0.167 | 33.1 | 4 | 75.0 | 50.8 | 29.2 | 1.47 | 491.5 | 6.1 |
| 20 | 0.55 | 0.18 | 36.3 | 4 | 74.2 | 49.1 | 29.6 | 1.51 | 490.9 | 7.0 |
| 21 | 0.57 | 0.18 | 35.0 | 6 | 73.5 | 48.9 | 28.8 | 1.50 | 490.4 | 7.0 |
| 22 | 0.50 | 0.135 | 30.0 | 4 | 77.5 | 55.2 | 31.5 | 1.40 | 491.8 | 5.1 |
| 23 | 0.48 | 0.13 | 30.0 | 6 | 77.4 | 55.8 | 32.3 | 1.38 | 490.4 | 5.7 |
| 24 | 0.46 | 0.13 | 31.4 | 4 | 78.0 | 55.9 | 33.1 | 1.39 | 491.1 | 5.4 |
| 25 | 0.46 | 0.13 | 31.4 | 6 | 77.5 | 55.7 | 33.1 | 1.39 | 490.1 | 5.7 |
| 26 | 0.80 | 0.2 | 27.7 | 14 | 67.2 | 44.8 | 19.9 | 1.49 | 491.7 | 7.7 |
| 27 | 0.80 | 0.2 | 27.7 | 19 | 65.7 | 44.3 | 20.0 | 1.48 | 490.4 | 8.7 |
| 28 | 0.79 | 0.22 | 30.9 | 16 | 65.8 | 43.0 | 20.5 | 1.52 | 490.3 | 8.7 |
| 29 | 0.78 | 0.23 | 32.7 | 12 | 66.6 | 42.6 | 20.9 | 1.56 | 491.1 | 8.6 |
| 30 | 0.78 | 0.23 | 32.7 | 6 | 68.4 | 43.2 | 20.9 | 1.58 | 492.8 | 7.4 |
| 31 | 0.85 | 0.27 | 35.3 | 6 | 65.8 | 38.8 | 18.2 | 1.69 | 492.7 | 8.3 |
| 32 | 0.85 | 0.27 | 35.3 | 11 | 64.3 | 38.3 | 18.2 | 1.68 | 491.4 | 9.3 |
| 33 | 0.85 | 0.26 | 33.9 | 15 | 63.6 | 38.7 | 18.2 | 1.64 | 490.9 | 9.5 |
| 34 | 0.85 | 0.28 | 36.6 | 15 | 62.7 | 37.0 | 18.3 | 1.69 | 490.3 | 10.0 |
| 35 | 0.90 | 0.28 | 34.5 | 15 | 62.2 | 36.4 | 16.2 | 1.70 | 491.0 | 10.0 |
| 36 | 0.65 | 0.16 | 27.3 | 15 | 71.2 | 49.5 | 24.6 | 1.43 | 490.4 | 7.0 |
| 37 | 0.66 | 0.16 | 26.9 | 12 | 72.0 | 49.6 | 24.2 | 1.45 | 491.6 | 6.3 |
| 38 | 0.67 | 0.17 | 28.1 | 14 | 70.8 | 48.2 | 23.8 | 1.46 | 490.3 | 6.9 |
| 39 | 0.64 | 0.18 | 31.0 | 14 | 70.4 | 47.4 | 24.9 | 1.48 | 490.3 | 7.8 |
| 40 | 0.60 | 0.17 | 31.4 | 10 | 72.6 | 49.3 | 26.7 | 1.47 | 490.2 | 7.1 |
| 41 | 0.60 | 0.17 | 31.4 | 4 | 74.3 | 49.8 | 26.6 | 1.49 | 492.7 | 5.7 |
| 42 | 0.65 | 0.19 | 32.4 | 4 | 72.8 | 47.2 | 24.7 | 1.54 | 492.9 | 6.2 |
| 43 | 0.64 | 0.2 | 34.7 | 9 | 70.8 | 45.7 | 25.1 | 1.54 | 490.4 | 8.0 |
| 44 | 0.70 | 0.22 | 34.9 | 4 | 70.7 | 43.6 | 22.8 | 1.62 | 492.6 | 7.0 |
| 45 | 0.62 | 0.17 | 30.4 | 14 | 71.2 | 48.7 | 25.8 | 1.46 | 490.2 | 7.7 |
| 46 | 0.71 | 0.19 | 29.7 | 8 | 71.0 | 46.2 | 22.2 | 1.53 | 492.7 | 6.4 |
| 47 | 0.98 | 0.255 | 28.9 | 15 | 62.5 | 36.7 | 13.2 | 1.70 | 492.7 | 8.5 |
| 48 | 0.98 | 0.27 | 30.6 | 18 | 61.1 | 35.3 | 13.3 | 1.72 | 491.6 | 9.6 |
| 49 | 1.05 | 0.27 | 28.5 | 18 | 60.1 | 33.8 | 10.5 | 1.77 | 492.4 | 9.2 |
| 50 | 1.07 | 0.3 | 31.1 | 22 | 57.5 | 31.0 | 9.78 | 1.85 | 491.2 | 10.8 |
| 51 | 1.08 | 0.33 | 33.9 | 20 | 57.0 | 29.0 | 9.45 | 1.96 | 491.3 | 11.2 |
| 52 | 1.08 | 0.34 | 34.9 | 25 | 55.1 | 27.8 | 9.48 | 1.98 | 490.4 | 12.4 |

TABLEAU III

| N° ex. | Fe2O3 (%) | FeO (%) | Redox (%) | Co (ppm) | TLA4 (%) | TE4 (%) | TUV4 (%) | SE4 | $\lambda_D$ (nm) | P (%) |
|---|---|---|---|---|---|---|---|---|---|---|
| 53 | 0.38 | 0.08 | 23.1 | 4 | 82.0 | 65.4 | 36.7 | 1.25 | 493.3 | 3.0 |
| 54 | 0.52 | 0.118 | 25.2 | 4 | 78.6 | 57.5 | 30.6 | 1.36 | 493.8 | 3.8 |

TABLEAU III   (suite)

| N° ex. | Fe2O3 (%) | FeO (%) | Redox (%) | Co (ppm) | TLA4 (%) | TE4 (%) | TUV4 (%) | SE4 | $\lambda_D$ (nm) | P (%) |
|---|---|---|---|---|---|---|---|---|---|---|
| 55 | 0.55 | 0.132 | 26.6 | 4 | 77.4 | 55.4 | 29.4 | 1.39 | 493.7 | 4.3 |
| 56 | 0.80 | 0.2 | 27.7 | 8 | 68.9 | 45.4 | 19.9 | 1.51 | 493.7 | 6.5 |
| 57 | 0.86 | 0.25 | 32.3 | 6 | 66.6 | 40.3 | 17.7 | 1.65 | 493.5 | 7.5 |
| 58 | 0.65 | 0.16 | 27.3 | 6 | 73.9 | 50.3 | 24.6 | 1.46 | 493.8 | 5.2 |
| 59 | 0.95 | 0.25 | 29.2 | 12 | 64.0 | 38.0 | 14.4 | 1.68 | 493.3 | 7.9 |

**Revendications**

1. Verre coloré sodo-calcique bleu composé de constituants principaux formateurs de verre et d'agents colorants, caractérisé en ce qu'il comprend de 0.15 à 1.1% en poids de $Fe_2O_3$, présente un facteur rédox ne dépassant pas 45 % et offre une longueur d'onde dominante ($\lambda_D$) comprise entre 490 et 493 nm et une transmission lumineuse (TLA4) ainsi qu'une pureté d'excitation (P) satisfaisant la relation P >- 0.3 x TLA4 + 24.5.

2. Verre coloré selon la revendication 1, caractérisé en ce qu'il présente une transmission lumineuse (TLA4) supérieure ou égale à 55 %.

3. Verre coloré selon l'une quelconque des revendications 1 à 2, caractérisé en ce qu'il présente une transmission lumineuse (TLA4) et une pureté d'excitation (P) satisfaisant la relation P > - 0.3 x TLA4 + 26.5.

4. Verre coloré selon l'une quelconque des revendications 1 à 3, caractérisé en ce qu'il présente une longueur d'onde dominante ($\lambda_D$) inférieure ou égale à 492 nm.

5. Verre coloré selon l'une quelconque des revendications 1 à 4, caractérisé en ce qu'il présente une longueur d'onde dominante ($\lambda_D$) supérieure ou égale à 491 nm.

6. Verre coloré selon l'une quelconque des revendications 1 à 5, caractérisé en ce qu'il comprend en tant qu'agents colorants un composé de l'un au moins des éléments Cr, Ce, Co, Se, V, Ti, Mn.

7. Verre coloré selon l'une quelconque des revendications 1 à 6, caractérisé en ce qu'il comprend parmi ses agents colorants moins de 0.1 % en poids de TiO2.

8. Verre coloré selon l'une quelconque des revendications 1 à 7, caractérisé en ce qu'il comprend moins de 0.5% en poids de CeO2.

9. Verre coloré selon l'une quelonque des revendications 1 à 8, caractérisé en ce qu'il comprend moins de 0.13 % en poids de MnO2.

10. Verre coloré selon l'une quelconque des revendications 1 à 9, caractérisé en ce qu'il comprend les pourcentages en poids en agents colorants suivants, la quantité totale de fer étant exprimée sous forme de $Fe_2O_3$:

| | |
|---|---|
| $Fe_2O_3$ | 0.3 - 1.1 % |
| FeO | 0.10 - 0.30 % |
| Co | 0 - 0.0040 % |
| $Cr_2O_3$ | 0 - 0.0500 % |
| $V_2O_5$ | 0 - 0.0500 % |

et présente les propriétés optiques suivantes:

$$55 \% < TLA4 < 85 \%$$

$$36 \% < TE4 < 60 \%$$

$$P < 12 \%$$

**11.** Verre coloré selon l'une quelconque des revendications 1 à 10, caractérisé en ce qu'il présente une transmission lumineuse (TLA4) supérieure ou égale à 70 %.

**12.** Verre coloré selon la revendication 10, caractérisé en ce qu'il comprend les pourcentages en poids en agents colorants suivants, la quantité totale de fer étant exprimée sous forme de $Fe_2O_3$:

| $Fe_2O_3$ | 0.3 - 0.7 % |
|---|---|
| FeO | 0.10 - 0.20 % |
| Co | 0 - 0.0020 % |

et présente les propriétés optiques suivantes:

$$72 \% < TLA4 < 85 \%$$

$$49 \% < TE4 < 60 \%$$

$$3 \% < P < 9 \%$$

**13.** Verre coloré selon la revendication 12, caractérisé en ce qu'il comprend les pourcentages en poids en agents colorants suivants, la quantité totale de fer étant exprimée sous forme de $Fe_2O_3$:

| $Fe_2O_3$ | 0.4 - 0.6 % |
|---|---|
| FeO | 0.11-0.16% |
| Co | 0 - 0.0015 % |

et présente les propriétés optiques suivantes:

$$74 \% < TLA4 < 80 \%$$

$$51\% < TE4 < 58 \%$$

$$3 \% < P < 7 \%$$

$$\lambda_D \leq 492 \text{ nm}$$

**14.** Verre coloré selon la revendication 10, caractérisé en ce qu'il comprend les pourcentages en poids en agents colorants suivants, la quantité totale de fer étant exprimée sous forme de $Fe_2O_3$:

| $Fe_2O_3$ | 0.4 - 0.8 % |
|---|---|
| FeO | 0.16 - 0.23 % |
| Co | 0 - 0.0030 % |

et présente les propriétés optiques suivantes:

$$70\ \% < TLA4 < 77\ \%$$

$$39\ \% < TE4 < 50\ \%$$

$$4\ \% < P < 10\ \%$$

**15.** Verre coloré selon la revendication 14, caractérisé en ce qu'il comprend les pourcentages en poids en agents colorants suivants, la quantité totale de fer étant exprimée sous forme de $Fe_2O_3$ :

| | |
|---|---|
| $Fe_2O_3$ | 0.55 - 0.75 % |
| FeO | 0.16 - 0.23 % |
| Co | 0 - 0.0020 % |

et présente les propriétés optiques suivantes:

$$70\ \% < TLA4 < 74\ \%$$

$$41\% < TE4 < 48\ \%$$

$$6\ \% < P < 9\ \%$$

$$\lambda_D \leq 492\ nm$$

**16.** Verre coloré selon la revendication 10, caractérisé en ce qu'il présente une transmission lumineuse (TLA4) inférieure à 70 %.

**17.** Verre coloré selon la revendication 16, caractérisé en ce qu'il comprend moins de 0.01 %, de préférence moins de 0.0050 % en poids de $V_2O_5$ et moins de 0.0020 %, de préférence moins de 0.0015 % en poids de $Cr_2O_3$.

**18.** Verre coloré selon l'une quelconque des revendications 16 à 17, caractérisé en ce qu'il comprend les pourcentages en poids en agents colorants suivants, la quantité totale de fer étant exprimée sous forme de $Fe_2O_3$:

| | |
|---|---|
| $Fe_2O_3$ | 0.6 - 1.1 % |
| FeO | 0.20 - 0.30 % |
| Co | 0 - 0.0040 % |

et présente les propriétés optiques suivantes:

$$55\ \% < TLA4 < 69\ \%$$

$$30\ \% < TE4 < 47\ \%$$

$$6\ \% < P < 12\ \%$$

**19.** Verre coloré selon la revendication 18, caractérisé en ce qu'il comprend les pourcentages en poids en agents colorants suivants, la quantité totale de fer étant exprimée sous forme de $Fe_2O_3$:

| | |
|---|---|
| $Fe_2O_3$ | 0.75 - 0.95 % |
| FeO | 0.22 - 0.28 % |
| Co | 0 - 0.0030 % |

et présente les propriétés optiques suivantes:

$$63 \% < TLA4 < 69 \%$$

$$36 \% < TE4 < 45 \%$$

$$7 \% < P < 11 \%$$

$$\lambda_D \leq 492 \text{ nm}$$

**20.** Verre coloré selon l'une quelconque des revendications 1 à 19, caractérisé en ce qu'il comprend moins de 1.0 % en poids de $Fe_2O_3$.

**21.** Verre coloré selon l'une quelconque des revendications 1 à 20, caractérisé en ce qu'il forme un vitrage pour automobile.

**EP 1 031 543 A1**

Office européen
des brevets

**RAPPORT DE RECHERCHE EUROPEENNE**

Numéro de la demande

EP 99 10 3543

## DOCUMENTS CONSIDERES COMME PERTINENTS

| Catégorie | Citation du document avec indication, en cas de besoin, des parties pertinentes | Revendication concernée | CLASSEMENT DE LA DEMANDE |
|---|---|---|---|
| X | EP 0 536 049 A (SAINT GOBAIN VITRAGE INTERNATIONAL) 7 avril 1993 (1993-04-07) * revendications; exemples * | 1-21 | C03C3/087 C03C4/02 C03C4/08 |
| X | EP 0 820 964 A (PILKINGTON PLC) 28 janvier 1998 (1998-01-28) * le document en entier * | 1-21 | |
| X | US 5 478 783 A (G.L. HIGBY ET AL.) 26 décembre 1995 (1995-12-26) * tableau 1 * | 1-18,20, 21 | |
| A | US 5 807 417 A (E.N. BOULOS ET AL.) 15 septembre 1998 (1998-09-15) * revendication 1 * | 1-21 | |
| A | US 5 851 940 A (E.N. BOULOS ET AL.) 22 décembre 1998 (1998-12-22) * revendication 1 * | 1-21 | |
| A | US 4 866 010 A (E.N. BOULOS) 12 septembre 1989 (1989-09-12) * colonne 5, ligne 57 - colonne 6, ligne 33 * | 1-17 | DOMAINES TECHNIQUES RECHERCHES C03C |

Le présent rapport a été établi pour toutes les revendications

| Lieu de la recherche | Date d'achèvement de la recherche | Examinateur |
|---|---|---|
| LA HAYE | 16 juillet 1999 | Reedijk, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

## EP 1 031 543 A1

**ANNEXE AU RAPPORT DE RECHERCHE EUROPEENNE
RELATIF A LA DEMANDE DE BREVET EUROPEEN NO.**

EP 99 10 3543

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-07-1999

| Document brevet cité au rapport de recherche | | Date de publication | Membre(s) de la famille de brevet(s) | | Date de publication |
|---|---|---|---|---|---|
| EP  536049 | A | 07-04-1993 | FR | 2682101 A | 09-04-1993 |
| | | | AT | 156103 T | 15-08-1997 |
| | | | CA | 2097189 A | 04-04-1993 |
| | | | CZ | 9301210 A | 18-05-1994 |
| | | | DE | 69221244 D | 04-09-1997 |
| | | | DE | 69221244 T | 19-03-1998 |
| | | | DK | 536049 T | 09-03-1998 |
| | | | EP | 0768284 A | 16-04-1997 |
| | | | ES | 2107515 T | 01-12-1997 |
| | | | WO | 9307095 A | 15-04-1993 |
| | | | JP | 6503300 T | 14-04-1994 |
| | | | PL | 299429 A | 21-03-1994 |
| | | | PL | 170583 B | 31-01-1997 |
| | | | SK | 70593 A | 06-10-1993 |
| | | | US | 5545596 A | 13-08-1996 |
| | | | US | 5582455 A | 10-12-1996 |
| EP  820964 | A | 28-01-1998 | JP | 10101367 A | 21-04-1998 |
| US 5478783 | A | 26-12-1995 | AU | 699949 B | 17-12-1998 |
| | | | AU | 3137295 A | 04-03-1996 |
| | | | AU | 9046798 A | 07-01-1999 |
| | | | BR | 9506300 A | 05-08-1997 |
| | | | CA | 2172133 A | 15-02-1996 |
| | | | CN | 1135744 A | 13-11-1996 |
| | | | EP | 0721429 A | 17-07-1996 |
| | | | JP | 9505797 T | 10-06-1997 |
| | | | TR | 960782 A | 21-10-1996 |
| | | | WO | 9604212 A | 15-02-1996 |
| | | | US | 5910460 A | 08-06-1999 |
| | | | ZA | 9506370 A | 14-03-1996 |
| US 5807417 | A | 15-09-1998 | WO | 9902462 A | 21-01-1999 |
| US 5851940 | A | 22-12-1998 | WO | 9902461 A | 21-01-1999 |
| US 4866010 | A | 12-09-1989 | US | RE34639 E | 14-06-1994 |
| | | | CA | 1247659 A | 27-12-1988 |

EPO FORM P0460